(19) Europäisches Patentamt
European Patent Office
Office européen des brevets

(11) **EP 1 764 524 B1**

(12) **FASCICULE DE BREVET EUROPEEN**

(45) Date de publication et mention de la délivrance du brevet:
**06.04.2016 Bulletin 2016/14**

(51) Int Cl.:
***F16D 41/20*** *(2006.01)*

(21) Numéro de dépôt: **06291446.0**

(22) Date de dépôt: **14.09.2006**

(54) **Poulie de transmission de puissance**

Riemenscheibenantrieb

Power-transmitting pulley

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **19.09.2005 FR 0509558**

(43) Date de publication de la demande:
**21.03.2007 Bulletin 2007/12**

(73) Titulaire: **Hutchinson**
**75008 Paris (FR)**

(72) Inventeurs:
• **Kamdem, Henri**
**37400 Amboise (FR)**
• **Rointru, Claude**
**37230 Saint Etienne De Chigny (FR)**

(74) Mandataire: **Gevers & Orès**
**36 rue de Saint-Pétersbourg**
**75008 Paris (FR)**

(56) Documents cités:
**EP-A- 1 279 807 EP-A- 1 316 740**
**WO-A-03/048606 US-A- 5 234 089**
**US-A- 6 083 130**

**Description**

La présente invention concerne une poulie de transmission de puissance utilisable pour découpler un accessoire tel qu'un alternateur en présence de variations de vitesse induisant des variations de couple. Ces variations de vitesses peuvent être par exemple cycliques, ou bien se traduire par des à-coups ou bien encore par des décélérations ou des accélérations.

Il existe dans le domaine automobile plusieurs types de poulies de transmission de puissance permettant de découpler des accessoires, voir EP 1316740, US5234089 et US6083130.

Un premier type est constitué par les poulies à roue libre qui transmettent la puissance dans un seul sens et assurent un découplage en débrayant dans l'autre sens pour permettre des différences de vitesses entre la partie menante et la partie menée. Les billes, cames ou aiguilles qui engrènent sont métalliques, rigides et réalisent donc un accouplement rigide.

La partie intérieure présente de préférence la forme d'une came qui permet de coincer les éléments de liaison et d'assurer le passage du couple.

De telles poulies sont décrites notamment dans les Brevets US 4 725 259 et US 5 676 225;

Lors des phases de découplage qui interviennent en cas de décélération rapide de la partie externe, la partie interne entraînée par son inertie pure garde une vitesse élevée en l'absence totale de contact. La différence de vitesse entre l'élément menant externe et l'élément mené interne peut être suffisamment importante pour créer un phénomène de sur-régime.

La figure 2 du Brevet US 4 725 259 (reproduite ici en tant que figure 1) illustre la fluctuation temporelle de vitesse, la vitesse de la partie externe étant montrée en traits pleins, alors que celle de la partie interne est montrée en pointillés.

Lorsque la vitesse de la partie externe fluctue rapidement, le système entraîné est donc déconnecté, puis reconnecté à la partie externe :

-   si il n'y a pas de frottement, la vitesse de l'élément interne est quasiment constante
-   si il y a un couple résistant, la vitesse de l'élément interne fluctue un peu
-   le niveau de fluctuation de vitesse de la partie interne (menée) dépend de sa décélération, et donc de son couple résistant, et cette décélération peut être très importante si le couple résistant est élevé (par exemple dans le cas d'un alternateur à son débit électrique maximal).

Il existe des roues libres où le mouvement d'entraînement provient de la partie interne, et toute l'explication précédente reste valable, mais inversée.

Une poulie à roue libre présente plusieurs inconvénients :

1) En mode couplé, les billes sont coincées entre la partie externe et la partie interne. Lors de la phase de couplage (en P), le contact mécanique rigide génère un choc entraînant une montée instantanée d'effort. Une fois accouplée, la roue libre transmet intégralement le mouvement de la partie menante, avec les éventuels à coups supplémentaires. Tout ceci a pour conséquence des efforts dynamiques dans la transmission, qu'elle soit par courroie, chaîne, pignons ou directe et conduit aux endommagements associés (glissement, fatigue, usure).

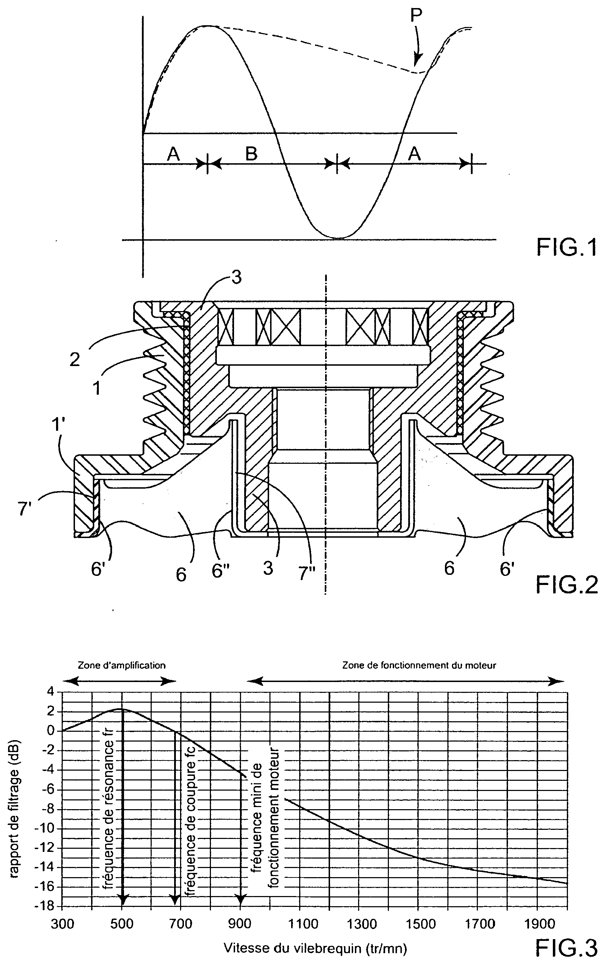

2) L'alternance des deux modes de fonctionnement à une fréquence élevée a été illustrée sur la figure 1. La décélération de la partie entraînée dépend du couple résistant : plus il est important, plus elle décélère brutalement, et donc plus elle suit le mouvement de la partie menante.

Lorsque ce couple résistant est dû à la prise de puissance d'un organe entraîné (alternateur, convertisseur, machine tournante, outil, etc) son mouvement suit quasiment le mouvement de la partie menante. Dans ce cas, tous les efforts dynamiques d'accélération/décélération sont transmis (glissement, fatigue, usure).

On peut résumer la situation comme ceci : si l'organe crée un couple résistant (ou si l'amplitude de fluctuation est faible), la roue libre reste bloquée et ne passe jamais en mode débrayé.

Dans le cas d'une courroie automobile à rainure en V entraînant un alternateur sur un moteur diesel :

-   lorsque le moteur tourne à bas régime, sa vitesse fluctue jusqu'à ± 20% à une fréquence de 30 Hz.
-   la courroie capte ce mouvement sur une poulie motrice (villebrequin) et l'achemine jusqu'à l'alternateur.
-   L'alternateur est entraîné par une roue libre, et cette roue libre déconnecte l'inertie à chaque décélération. Elle la reconnecte à chaque accélération.
-   Si l'on fait débiter du courant à l'alternateur, son couple atteint 10 à 15 Nm, ce qui suffit à freiner la phase débrayée, et la roue libre reste en mode couplé et ne déconnecte plus l'alternateur.
-   Si la roue libre se déverrouille, le verrouillage à la prochaine accélération est brutal et provoque un glissement de la courroie.

Du fait de son inertie, l'alternateur crée donc un couple dynamique d'autant plus élevé que la fluctuation est grande, ce qui entraîne successivement un glissement de la courroie, son abrasion, du bruit et/ou une fatigue des paliers.

Un deuxième type est constitué par les poulies à éléments élastiques dans lesquels un élément souple en torsion est intercalé entre la partie extérieure et la partie intérieure. Cet élément se présente sous la forme d'un anneau, d'un disque, d'un ressort, de tampons, etc. La raideur de cet élément est dimensionnée selon les couples à transmettre en statique et en dynamique. L'élément élastique permet une déformation pour absorber des variations de couple, mais il ne peut pas autoriser une rotation différentielle entre la partie menante et la partie menée.

Une catégorie de poulies à éléments élastiques est la poulie dite "découpleuse", dont la raideur est choisie pour filtrer toutes les variations de vitesse à partir d'une certaine fréquence d'excitation.

La figure 2 illustre un exemple de poulie élastique connue, la figure 3 en illustrant la réponse fréquentielle, pour laquelle fr représente la fréquence de résonance (en tr/mn) et fc la fréquence de coupure (en tr/mn). En ordonnées, l'amplitude est exprimée en dB, sous la forme d'un rapport de filtrage, le niveau O dB correspondant à l'amplitude à la fréquence de coupure fc.

La poulie de transmission représentée à la figure 2 présente un élément de poulie ayant un contour externe 1 adapté au profil de la denture d'une courroie nervurée en V. L'élément de poulie tourne autour d'un palier 2 et présente un prolongement 1' solidaire par l'intermédiaire d'une pièce 7' du contour externe 6' d'un corps en caoutchouc 6 dont le contour interne est solidaire par l'intermédiaire d'une pièce 7" d'une pièce 3 qui sert de liaison avec un arbre récepteur par exemple d'un alternateur.

Les poulies de ce type ne peuvent qu'osciller autour d'une position moyenne, puisque la liaison entre l'extérieur et l'intérieur est permanente.

Le rapport entre l'amplitude de fluctuation de la partie menante (externe) et de la partie menée (interne) évolue en fonction de la fréquence de la fluctuation.

En effet, l'association de la raideur et de l'inertie à entraîner forme un système résonant. Au-delà de la fréquence de coupure fc de la poulie élastique, la partie interne menée fluctue moins que la partie externe menante.

Ces poulies présentent également plusieurs inconvénients :

1) Un premier inconvénient est dû au fait qu'elles présentent également un palier (généralement à base de PTFE) qui supporte les efforts radiaux. Ce frottement nuit au filtrage, puisqu'il crée un seuil d'adhérence en deçà duquel la poulie reste fixe (donc rigide).

2) Si la fluctuation de vitesse est à une fréquence très inférieure à la fréquence de résonance fr, ou si l'à-coup est progressif, l'élément élastique ne se déforme presque pas, et l'effort est transmis. Le spectre en fréquence (voir figure 3) doit être parfaitement connu au moment du dimensionnement, sinon, la poulie élastique est inopérante.

3) Si la fluctuation de vitesse est à une fréquence plus élevée que la fréquence de coupure fc ou si l'à-coup est bref, l'élément élastique se déforme. Cette déformation se fait dans les deux sens ; l'énergie stockée dans le sens positif est restituée par rappel élastique dans l'autre sens, et ainsi de suite. Cela cause un échauffement et un endommagement de la poulie.

4) Si la fluctuation de vitesse est à une fréquence très proche de la fréquence de résonance fr (voir figure 3), la poulie élastique amplifie la fluctuation (rapport de filtrage > O dB). Cela produit l'effet contraire à celui qui était recherché. Cette amplification s'accompagne de très grandes déformations dans les deux sens ; l'énergie stockée dans le sens positif est restituée par rappel élastique dans l'autre sens, et ainsi de suite. Cela cause aussi un échauffement et un endommagement.

Considérons le cas d'une application à une automobile pour laquelle :

- Le moteur (à N = 4 cylindres) tourne à bas régime (ralenti à $V_m$ = 900 tr/mn) et sa vitesse fluctue jusqu'à $\pm$ 20% à une fréquence Fexc de 30 Hz.

On rappelle que $F_{exc} = V_m N/120$.

- L'alternateur est entraîné par une poulie découpleuse qui est censée filtrer à partir de 700 tr/mn (23,3 Hz).
- Le régime de ralenti est à $V_m$ = 900 tr/mn ($F_{exc}$ = 30 Hz) et donc la poulie filtre correctement

Du fait de cette absorption, l'élément élastique (en caoutchouc) se déforme de près de $\pm$20°, s'échauffe, durcit et peut casser rapidement.

Au démarrage, le moteur passe rapidement d'une vitesse nulle à on régime de ralenti (900 tr/mn). Il se trouve donc pendant un laps de temps court à la fréquence de résonance fr. A cet instant, l'amplitude de formation de l'élément

peut caoutchouc atteindre $\pm$ 40° et il peut casser très rapidement si l'on répète plusieurs fois le démarrage.

- Enfin, si le moteur décélère brutalement ou cale, la courroie qui est reliée au vilebrequin s'arrête de tourner, mais l'alternateur continue de tourner en raison de son inertie. La courroie est donc brusquement détendue puis retendue, avec un claquement.

Un troisième type est constitué par les poulies à embrayage élastique par ressort.

Dans une poulie à embrayage élastique, par exemple selon le Brevet US 6083130 (pris en sa Figure 2 reproduite ici en tant que Figure 4), on intercale entre la partie extérieure 120 et la partie intérieure 52 un ressort primaire de torsion 88 qui réalise un embrayage grâce à son expansion radiale. Cet embrayage est ensuite connecté à l'élément résilient qui peut être un second ressort de torsion 85-86.

Dans le sens où le ressort primaire se contracte, il y a suppression de la liaison entre la partie menante et la partie menée. Cependant, il existe un seuil de friction qui maintient la liaison, d'où un phénomène de patinage.

Dans le sens où le ressort primaire s'expanse, cela crée une liaison forte, et l'élément résilient (ici un ressort) prend le relais pour transmettre les efforts.

A partir d'un certain angle de torsion, l'élément résilient ne peut plus se déformer (spires jointives). Le ressort doit donc être très élancé, ce qui conduit à augmenter la longueur axiale de la poulie et donc l'encombrement.

Les roulements 118 travaillent avec beaucoup de déport, ce qui réduit leur durée de vie. Pour reprendre une partie des efforts radiaux, un palier en PTFE 110-112 est intercalé à l'opposé du roulement. Ce palier crée un frottement qui s'ajoute à celui de l'embrayage et réduit l'efficacité en mode déverrouillé.

Une variante du troisième type de poulie est décrite dans le Brevet US 6 394 248 notamment en ses figures 2 et 3, reproduites ici en tant que Figures 5a et 5b. Le principe du ressort qui s'expanse 22 est conservé. Par contre, l'élément résilient est une succession de ressorts de compression qui s'intercalent entre des ailettes 27 et 47.

L'amplitude de déformation est forcément limitée puisque les ressorts ne peuvent être comprimés à bloc.

D'autre part, les éléments 17 et 26 devraient avoir un guidage à faible friction, ce qui n'est pas le cas, et il y a donc un risque élevé de grippage.

Dans cette construction, l'effort radial de la courroie est supporté par le roulement 50 lequel a un déport trop important.

L'analyse ci-dessus montre que :

- les dispositifs à roue libre sont trop rigides une fois verrouillés et leur efficacité dépend du couple résistant.
- les poulies élastiques ne permettent pas à l'organe entraîné de continuer sur son élan en cas de décélération. La friction interne est préjudiciable au filtrage.
- les poulies à embrayage élastique par ressort sont complexes et ont le même problème de friction. Leur encombrement est aussi préjudiciable.

L'invention permet d'éviter au moins certains inconvénients précités en associant en série une roue libre (par exemple à billes ou à aiguilles) et un élément élastique de raideur adaptée au découplage. La charge radiale est supportée par un roulement à billes généralement centré par rapport à la courroie de sorte qu'il subit un faible déport. La liaison mécanique n'est établie par l'intermédiaire de l'élément élastique que lorsque la roue libre est dans son mode verrouillé. En mode déverrouillé, par exemple en cas de ralentissement de l'élément menant, l'organe entraîné continue librement sa rotation en fonction de son inertie.

L'invention concerne ainsi une poulie de transmission de puissance destinée à un accessoire entraîné par courroie comprenant une élément de poulie ayant un contour extérieur nervuré qui est adapté à recevoir une courroie, et un élément élastique interposé entre l'élément de poulie et un dispositif récepteur destiné à être couplé à un organe mené par la courroie, caractérisée en ce qu'elle comporte un dispositif à roue libre à billes, à rouleaux ou à cames disposé en série avec l'élément élastique entre l'élément de poulie et ledit arbre.

Elle peut être caractérisée en ce que le dispositif à roue libre est disposé entre l'élément de poulie et l'élément élastique, lequel est solidarisé audit dispositif récepteur ou en ce que le dispositif à roue libre est disposé entre l'élément élastique et ledit arbre, l'élément élastique étant solidarisé avec l'élément de poulie.

Avantageusement, au moins un roulement par exemple à billes ou à aiguilles est interposé entre le contour extérieur nervuré et soit un écrou destiné à être couplé à un arbre couplé audit organe, soit ledit arbre (lorsque la poulie est montée).

L'élément élastique peut comporter au moins une pièce en élastomère. Il peut être un ressort, par exemple un ressort spirale.

L'invention concerne également un système ayant au moins une poulie de découplage d'accessoire tel que définie ci-dessus.

D'autres caractéristiques et avantages de l'invention apparaîtront mieux à la lecture de la description ci-après en liaison avec les dessins dans lesquels :

- la figure 1 reproduit la figure 2 du Brevet US 4 725 259 précité ;
- la figure 2 est un exemple de poulie élastique connue, la figure 3 en illustrant la réponse fréquentielle avec en ordonnée le rapport de filtrage (dB) et en abscisse la vitesse du vilebrequin (tr/mn) ;

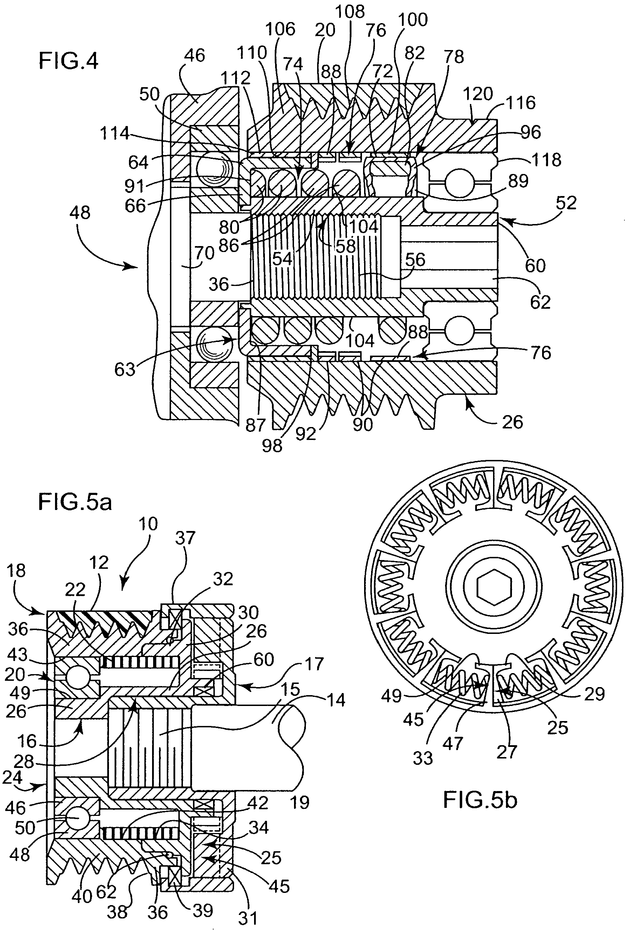

- la figure 4 reprend la figure 2 du Brevet US 6 083 130 précité ;
- les figures 5a et 5b reprennent les figures 2 et 3 du Brevet US 6 394 248 précité ;

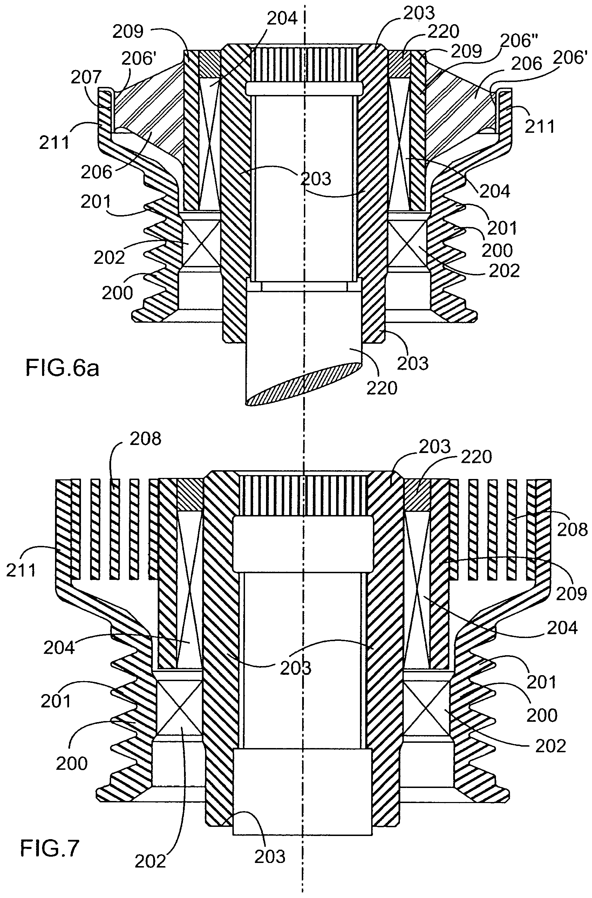

- les figures 6a à 6c, 7 et 8 sont des variantes de poulies selon l'invention ;

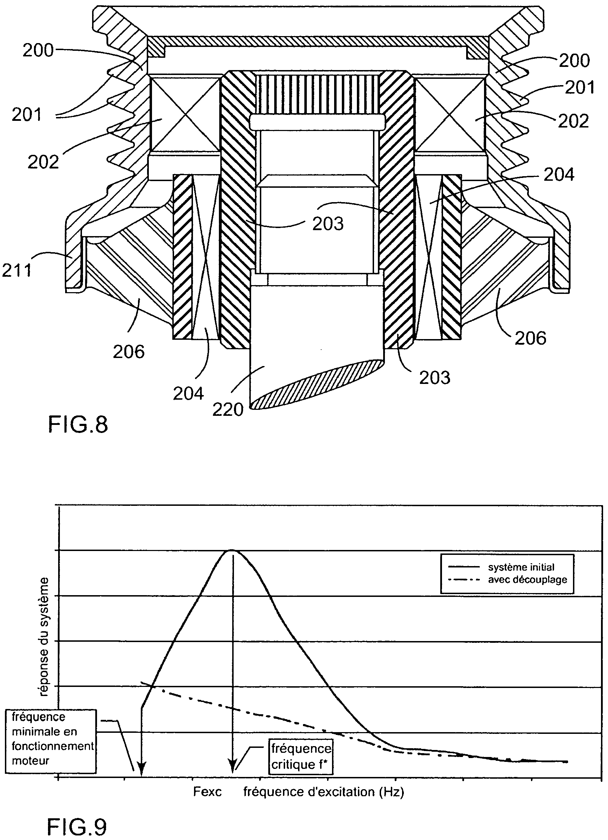

- et la figure 9 illustre une courbe de réponse typique d'un système de transmission.

Selon les figures 6a à 6c et 7, la pièce 200 est un élément de poulie réceptrice présentant un contour externe en 201 qui reçoit les dents d'une courroie par exemple à nervures en V ou trapézoïdale. La pièce 202 est un roulement à billes. Il est préférentiellement placé sous la denture 201 de la pièce 200 pour éviter un déport axial, ce qui évite un palier complémentaire. Le roulement à billes 202 reprend tous les efforts radiaux et axiaux. On peut mettre en oeuvre plus d'un roulement. La pièce 203 est un écrou, qui sert d'une part de pièce de liaison avec un arbre récepteur 220 d'un accessoire, par exemple d'un alternateur dont l'extrémité est située du côté de l'élément 200 de poulie réceptrice nervurée en 201, et d'autre part de chemin de roulement d'une roue libre 204 à billes, à aiguilles ou à cames intercalée entre un corps découpleur 206 et l'écrou 203. A cet effet, le contour externe 206' du corps découpleur 206 est adhérisé à une pièce 207 solidaire d'un prolongement 211 de la poulie réceptrice 200, et le contour interne 206" est adhérisé à une armature interne 209 du corps découpleur 206.

Avec cette construction, les fonctions roue libre et reprise de charge sont totalement dissociées. La roue libre 204 ne subit aucun effort axial et radial, à l'inverse des poulies à roue libre de l'art antérieur.

Un insert facultatif par exemple un joint à lèvre 220 (Figure 6a) monté serré sur la pièce 209 peut permettre de combler un jeu longitudinal éventuel entre la cage extérieure de la roue libre et l'armature 209 du corps découpleur 206.

Ainsi, le même élément de roue libre 204 peut être adapté à des corps de découpleur ayant des géométries différentes.

Le corps découpleur 206 en caoutchouc apporte lors de la rotation à la fois une fonction de résilience (par son côté élastique) mais aussi, par son effet visqueux, une fonction d'amortissement (hystérésis).

Les figures 6a à 6c représentent des variantes avec différentes dispositions de la roue libre 204 et du roulement 202.

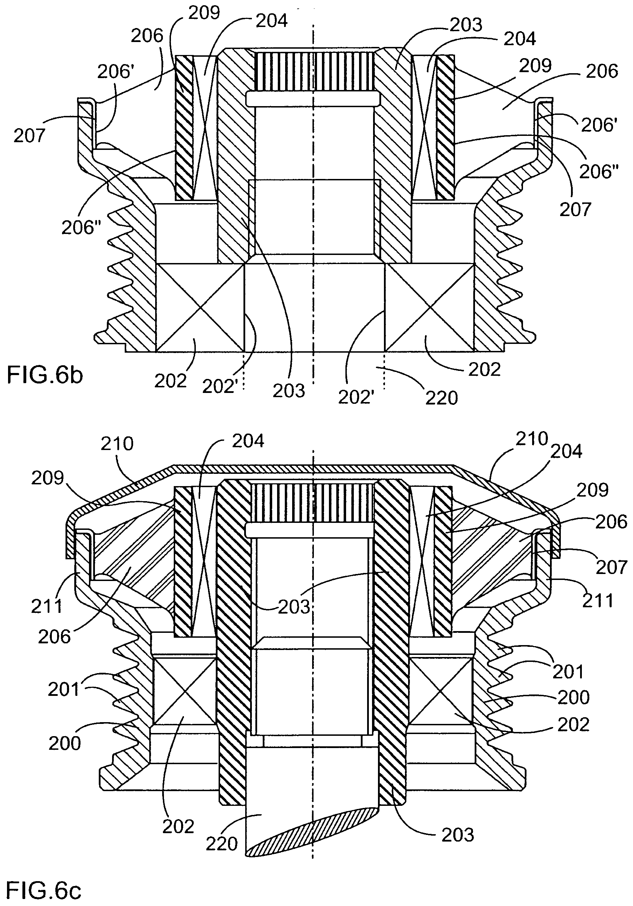

Comme présenté à la figure 6c, un capot de protection 210 et des joints adéquats peuvent être placés à l'extrémité libre, où se trouvent la roue libre 204 et le corps découpleur 206.

La fonction découpleur peut également être remplie par un ressort métallique, par exemple un ressort spiral 208 (figure 7).

Les figures 6a à 6c et 7 montrent que l'on peut utiliser différents types de roulements (à billes, à aiguilles, etc...). Soit le roulement est monté sur l'écrou 203, comme représenté figure 6a, 6c et 7, soit il est directement guidé sur l'arbre récepteur 220 par son contour interne 202' (figure 6b).

Il est également possible de disposer la roue libre 204 en périphérie du corps en caoutchouc 206, c'est-à-dire entre le corps 206 et le prolongement 211.

La construction est simple et fait appel à peu d'éléments.

Dans tous les cas, le dispositif décrit permet d'avoir un effet de découplage même lorsque l'organe récepteur crée un couple résistant, ce qui n'est pas le cas avec les roues libres de l'art antérieur.

La mise en roue libre permet de désolidariser la liaison du découpleur avec l'arbre, et donc de supprimer la résonance.

Si l'effet de découplage n'est pas indispensable, il est possible de choisir la raideur de l'élément souple pour amortir les changements d'état de la roue libre.

Il n'y a pas de frottements internes, car les reprises de charge radiale se font par l'intermédiaire d'un roulement (à billes ou autres), et non par des paliers lisses.

Le dispositif selon l'invention permet de dissocier la reprise de charge (radiale/axiale) de la fonction roue libre.

La géométrie et les propriétés mécaniques de l'élément de découplage peuvent être adaptées sans remettre en cause la géométrie de la roue libre ni du roulement.

L'invention peut être mise en oeuvre de manière modulaire, avec des composants communs réutilisables.

L'amplitude du débattement de l'élément élastique n'est pas limitée contrairement à certaines poulies de l'art antérieur qui contiennent des butées, ou dont les ressorts sont jointifs.

Par ailleurs, grâce à la mise en roue libre, l'amplitude de déformation est réduite à la seule partie utile pour filtrer, et la fatigue sur l'élément souple est réduite.

L'invention est applicable sur les transmissions de puissance par courroies (moteur essences ou diesels), mais plus généralement dans tous les cas où l'on rencontre des fluctuations de vitesse et de couple.

Lorsque la roue libre est verrouillée, l'élément élastique entre en fonction. Il supporte alors le couple résistant généré par l'organe entraîné. Cela se traduit par une déformation moyenne de l'élément élastique en superposition avec les fluctuations de couple dynamique dues à la variation de vitesse. Ces fluctuations se traduisent par une fluctuation de la déformation de l'élément élastique autour de la position moyenne.

En mode déverrouillé, la roue libre ne peut pas transmettre de couple, ce qui permet de limiter les amplitudes a de déformation angulaire de l'élément élastique (à la manière d'un écrêtage).

Cette mise en roue libre permet de supprimer l'effet de résonance que l'on observe sur les découpleurs. En effet, dès lors que l'amplitude du débattement de l'élément élastique passe par zéro, la roue libre se déverrouille, et l'élément élastique ne stocke plus d'énergie élastique.

Enfin, lorsque la vitesse de la partie menante chute brutalement, l'élément souple revient d'abord à sa position neutre, et ensuite la mise en roue libre sans frottement autorise l'élément mené à continuer sur sa lancée en fonction de son inertie, ce qui fait qu'il n'y a pas d'énergie stockée dans l'élément souple au moment du passage en mode roue libre.

La figure 8 représente une variante dans laquelle le dispositif à roue libre 204 et l'élément élastique sont disposés du côté de la liaison de la poulie à l'arbre 220 de l'accessoire entraîné alors que l'élément de poulie réceptrice 200 nervuré en 201 est disposé à l'opposé de la liaison de la poulie à l'arbre 220.

La présente invention permet de manière surprenante d'augmenter la raideur de l'élément élastique.

Dans un dispositif de transmission automobile par courroie, la succession des inerties et des raideurs crée un système mécanique oscillant qui possède un ensemble de résonances propres. Le terne résonance désigne le fait que les vitesses angulaires des organes en rotation sont amplifiées.

Le mouvement d'entraînement étant par nature pseudo sinusoïdal en raison des instabilités de vitesse du moteur thermique, il présente une fréquence qui varie en même temps que le régime du moteur et, balaye une grande plage de fréquence et accroche donc toutes les fréquences de résonance du système de transmission.

Le terme « réponse » désigne toutes les manifestations dynamiques du comportement du système. Les résonances se traduisent par d'importants efforts dynamiques, ou par des battements de brins de la courroie de transmission, ou encore par des débattements de tendeurs, parfois tout cela à la fois.

La courbe de la figure 9 illustre l'allure générale des réponses en fonction de la fréquence d'excitations. Cette fréquence est proportionnelle au nombre de cylindres et à la vitesse de rotation moyenne du vilebrequin.

La fréquence critique f* peut être l'une des fréquences propres du système. La réponse est de grande amplitude car l'excitation générée par le moteur apporte de l'énergie au système en résonance.

Dans d'autres cas, f* peut aussi être la fréquence à laquelle l'amplitude de l'excitation du moteur est la plus élevée.

Pour les moteurs diesel et en particulier à injection directe, c'est dans la plage 20 - 60 Hz que l'on a généralement les plus grands niveaux d'instabilité de vitesse.

C'est également dans cette plage de fréquence, qu'il est courant de trouver des fréquences de résonance du système de transmission par courroie.

Il existe donc des risques élevés pour que les deux coïncident. Quand excitation élevée et résonance coïncident, le système n'est pas viable.

Sur la figure 9, la réponse à la fréquence critique f* dépasse par hypothèse le niveau admissible par le système (risque de dégradation de la fonction ou de perte totale de la fonction). L'une des solutions connues de l'homme de l'art consiste donc à découpler élastiquement la partie du système responsable de cette amplification ;

Le choix de la raideur de l'élément élastique obéit aux exigences à la fois de découplage et de durabilité.

Dans l'art antérieur, la raideur du système de découplage est choisie de sorte que la fréquence de coupure fc de la poulie élastique, soit toujours inférieure à la fréquence critique f*. On appelle cela le « calage en fréquence ». Ainsi, lorsque le moteur tourne aux alentours de f*, la réponse du système est très inférieure à celle qu'il aurait eu sans le système de découplage.

Cette situation revient donc à poser :

$$fc \leq f^* \qquad\qquad (1)$$

Par ailleurs, une règle bien connue de l'homme de l'art (théorie des systèmes oscillants) relie fr à fc de manière suivante :

$$fc = \sqrt{2}\ fr \qquad\qquad (2)$$

Il existe également une relation bien connue qui relie « fr » à la raideur « k » du découplage et à l'inertie « I » de l'accessoire à découpler :

$$fr = \frac{1}{2\pi}\sqrt{\frac{k}{I}} \qquad\qquad (3)$$

De ces deux relations, l'homme du métier obtient généralement un critère fonctionnel sur la raideur k maximale à ne pas dépasser pour rester efficace en découplage :

$$k \leq 2\,\pi^2\,(f^*)^2\,I \qquad\qquad (4)$$

Dans un second temps, les exigences de durabilité permettent de fixer une valeur inférieure pour k, qui dépend du couple à transmettre, de la tenue des matériaux constitutifs de cette raideur (disque élastomère, ressort métallique).

Dans l'art antérieur, et plus particulièrement dans le domaine des transmissions automobiles par courroies impliquant un alternateur découplé, on observe que la raideur k peut descendre jusqu'à 0,15 Nm/°, mais les déformations associées sont importantes et mettent en péril la résistance de l'élément élastique.

Dans certains cas, le couple résistant créé par l'organe (un alternateur de forte puissance) est tel que la raideur k définie par la relation (4) ne permet pas de définir un système viable.

Prenons l'exemple d'un moteur Diesel 4 cylindres tournant à 600 tr/mn et la fréquence 20 Hz est justement la fréquence f* qui pose problème.

L'alternateur a une inertie de 3 g.m$^2$ et délivre un couple électrique nominal de 14 Nm.

La raideur fonctionnelle k selon la relation (4) doit être inférieure à 23,7 Nm/rad, soit en unités usuelles 0,41 Nm/°.

Sous l'effet du couple de 14 Nm, et avec une telle raideur, la déformation angulaire nominale sera donc de 34 degrés (sans compter sur la déformation dynamique supplémentaire autour de cette valeur nominale liée à l'inertie et à l'accélération angulaire du signal sinusoïdal). La géométrie de l'élément découpleur est telle que pour un tel angle, les taux d'allongement dans la matière dépassent les capacités du matériau. Il y a donc tout intérêt à augmenter la raideur pour réduire l'angle de déformation nominale et celui donné par l'effet dynamique supplémentaire. Or, compte tenu du besoin de découpler défini par la relation (1), une augmentation de raideur (et donc de fr ou de fc), est impossible.

L'un des intérêts de l'invention réside dans l'écrêtage du phénomène de résonance.

Puisque le mouvement ne peut pas augmenter à l'infini, la mise en roue libre sur une partie de l'oscillation coupe net toute amplification exagérée des vibrations.

Quand la poulie découpleuse de l'art antérieur entretenait sa propre résonance (et sa destruction), la poulie selon l'invention écrête la résonance de l'élément élastique et se préserve grâce à la mise en roue libre.

Ainsi, la fréquence de coupure fc du découpleur élastique peut ne pas respecter la relation (1) donnée plus haut.

L'invention permet d'être moins bien « calé » en fréquence et élargit le critère de position de la fréquence de résonance du découpleur.

Le fait d'intercaler une roue libre en série avec l'étage découpleur élastique permet de choisir une raideur k de cet étage découpleur élastique plus élevée que selon l'art antérieur.

Il en résulte que sous l'effet du couple résistant, les taux de déformation qui subit l'élément découpleur élastique sont plus faibles, et sa durabilité est augmentée.

Bien entendu, la capacité d'écrêtage de la roue libre est limitée. En particulier, si le couple résistant de l'organe entraîné se superpose au couple dynamique, la mise en roue libre est alors moins fréquente, et seule une partie des oscillations est écrêtée ;

Il n'est pas souhaitable d'avoir une raideur k trop élevée, faute de quoi on tomberait dans les inconvénients des poulies à roue libre de l'art antérieur (qui correspondent à une valeur infinie de k).

Un bon compromis entre ces deux situations est de fixer la nouvelle limite maximale pour fc :

$$fc \leq 2\,f^*,\ \text{soit} \qquad\qquad (5)$$

$$k \leq 8\,\pi^2\,(f^{*2})\,I$$

et de préférence :

7

$$fc \leq 1,5\ f^*, \text{ soit } k \leq 4,5\ \pi^2\ (f^*)^2\ I \qquad (6)$$

dans l'un ou l'autre cas, k peut de manière préférée être supérieur à $2\pi^2$ (f*)² I

Reprenons l'exemple du moteur Diesel 4 cylindres tournant à 600 tr/mn, la fréquence 20 Hz étant justement la fréquence f* qui pose problème.

L'alternateur a une inertie de 3 g.m² et délivre un couple de 14 Nm.

La raideur fonctionnelle k selon la relation (6) doit être inférieure à 53,3 Nm/rad, soit en unités usuelles 0,93 Nm/°.

Sous l'effet du couple de 14 Nm, et avec une telle raideur, la déformation angulaire sera donc de 15 degrés (au lieu des 34 précédents). La même géométrie de l'élément découple générera donc des taux d'allongement plus de deux fois inférieurs à ceux de l'art antérieur.

On notera que pour éviter un phénomène éventuel de bruyance à haute vitesse, il peut être souhaitable de freiner légèrement l'arbre en roue libre, de manière connue en soi, par exemple de la Demande PCT WO/03036114.

**Revendications**

1. Poulie de transmission de puissance permettant d'assurer un découplage d'un accessoire entraîné par courroie et comprenant un élément de poulie (200) menant ayant un contour extérieur qui est adapté à recevoir une courroie, et un élément élastique (206, 208) présentant une fonction de découplage interposé entre l'élément de poulie (200) et un dispositif récepteur (203, 220) destiné à être couplé audit accessoire, de façon qu'elle comporte une seule roue libre (204) du type à billes, à aiguilles ou à cames disposé en série avec l'élément élastique (206, 208) entre l'élément de poulie (200) et ledit dispositif récepteur (203, 220), la roue libre (204) étant soit disposée entre l'élément élastique (206, 208) et ledit dispositif récepteur (203, 220), l'élément élastique étant solidarisé avec l'élément de poulie (200), soit disposée entre l'élément de poulie (200) et l'élément élastique (206, 208), lequel est solidarisé audit dispositif récepteur (203, 220), **caractérisée en ce que** la roue libre (204) assure, dans un état verrouillé, une transmission de puissance lorsque l'élément menant est entraîné par la courroie et assure, dans un état déverrouillé, un découplage en roue libre sinon, l'élément élastique (206, 208) entrant en fonction lorsque la roue libre (204) est dans son état verrouillé.

2. Poulie selon la revendication 1, **caractérisée en ce que** la roue libre (204) est montée sur un écrou (203) destiné à recevoir un arbre couplé audit accessoire.

3. Poulie selon la revendication 1, **caractérisée en ce que** l'élément élastique (206, 208) est solidarisé à un écrou (203) destiné à recevoir un arbre (220) couplé audit accessoire.

4. Poulie selon une des revendications précédentes, **caractérisée en ce qu'**elle présente au moins un roulement (202) interposé entre ledit contour extérieur nervuré (201) et un écrou (203) destiné à recevoir un arbre (220) couplé audit accessoire.

5. Poulie selon une des revendications 1 à 3, **caractérisée en ce qu'**elle présente au moins un roulement (202) situé à l'intérieur dudit contour externe nervuré (201) et présentant un contour interne (202') apte à être guidé sur un arbre (220) couplé audit accessoire.

6. Poulie selon une des revendications 4 ou 5, **caractérisée en ce que** qu'au moins un dit roulement (202) est un roulement à billes ou à aiguilles.

7. Poulie selon une des revendications précédentes, **caractérisée en ce que** l'élément élastique (206) comporte au moins une pièce en élastomère.

8. Poulie selon une des revendications 1 à 6, **caractérisée en ce que** l'élément élastique est un ressort (208), notamment un ressort spirale.

9. Poulie selon une des revendications précédentes, **caractérisée en ce que** ledit accessoire est un alternateur d'un véhicule automobile.

10. Système de transmission **caractérisé en ce qu'**il comporte au moins une poulie de découplage d'accessoire selon une des revendications précédentes.

**11.** Système selon la revendication 10, **caractérisé en ce que** la raideur k de l'élément élastique (206, 208) obéit à la relation :

$$k \leq 8\pi^2 (f^*)^2\, I$$

f* désignant une fréquence critique du système et I l'inertie de l'accessoire à découpler.

**12.** Système selon la revendication 11, **caractérisé en ce que** :

$$k \leq 4,5\ \pi^2 (f^*)^2\, I.$$

**13.** Système selon une des revendications 11 ou 12, **caractérisé en ce que** :

$$2\pi^2 (f^*)^2\, I < k.$$

**Patentansprüche**

**1.** Riemenscheibenantrieb zur Sicherstellung des Entkoppelns eines Zusatzgerätes, das von einem Riemen angetrieben wird, und ein antreibendes Riemenscheibenelement (200) mit einer Außenkontur, die für die Aufnahme eines Riemens geeignet ist, umfasst, und ein elastisches Element (206, 208) mit einer Entkoppelungsfunktion, das zwischen dem Riemenscheibenelement (200) und einer Aufnahmevorrichtung (203, 220) angeordnet ist, die dazu dient, an das Zusatzgerät gekoppelt zu werden, so dass er einen einzigen Freilauf (204) des Typs mit Kugeln, mit Nadeln oder mit Nocken, der in Reihe mit dem elastischen Element (206, 208) zwischen dem Riemenscheibenelement (200) und der Aufnahmevorrichtung (203, 220) angeordnet ist, aufweist, wobei der Freilauf (204) entweder zwischen dem elastischen Element (206, 208) und der Aufnahmevorrichtung (203, 220), wobei das elastische Element mit dem Riemenscheibenelement (200) verbunden ist, angeordnet ist, oder zwischen dem Riemenscheibenelement (200) und dem elastischen Element (206, 208), das mit der Aufnahmevorrichtung (203, 220) verbunden ist, angeordnet ist, **dadurch gekennzeichnet, dass** der Freilauf (204) in einem verriegelten Zustand eine Leistungsübertragung sicherstellt, wenn das antreibende Element vom Riemen angetrieben wird, und in einem entriegelten Zustand das Entkoppeln im Freilauf sicherstellt, wobei ansonsten das elastische Element (206, 208) in Betrieb geht, wenn der Freilauf (204) in seinem verriegelten Zustand ist.

**2.** Riemenscheibe nach Anspruch 1, **dadurch gekennzeichnet, dass** der Freilauf (204) auf einer Mutter (203) montiert ist, die dazu dient, eine Welle, die an das Zusatzgerät gekoppelt ist, aufzunehmen.

**3.** Riemenscheibe nach Anspruch 1, **dadurch gekennzeichnet, dass** das elastische Element (206, 208) mit einer Mutter (203) verbunden ist, die dazu dient, eine Welle (220), die an das Zusatzgerät gekoppelt ist, aufzunehmen.

**4.** Riemenscheibe nach einem der vorhergehenden Ansprüche, **dadurch gekennzeichnet, dass** sie zumindest ein Lager (202) zwischen der rippigen Außenkontur (201) und einer Mutter (203), die dazu dient, eine Welle (220), die an das Zusatzgerät gekoppelt ist, aufzunehmen, aufweist.

**5.** Riemenscheibe nach einem der Ansprüche 1 bis 3, **dadurch gekennzeichnet, dass** sie zumindest ein Lager (202) aufweist, das sich im Inneren der rippigen Außenkontur (201) befindet, und eine Innenkontur (202') aufweist, die fähig ist, auf einer Welle (220), die an das Zusatzgerät gekoppelt ist, geführt zu werden.

**6.** Riemenscheibe nach einem der Ansprüche 4 oder 5, **dadurch gekennzeichnet, dass** zumindest ein Lager (202) ein Kugellager oder ein Nadellager ist.

**7.** Riemenscheibe nach einem der vorhergehenden Ansprüche, **dadurch gekennzeichnet, dass** das elastische Element (206) zumindest ein Teil aus Elastomer aufweist.

**8.** Riemenscheibe nach einem der Ansprüche 1 bis 6, **dadurch gekennzeichnet, dass** das elastische Element eine Feder (208), insbesondere eine Spiralfeder ist.

**9.** Riemenscheibe nach einem der vorhergehenden Ansprüche, **dadurch gekennzeichnet, dass** das Zusatzgerät ein Wechselstromgenerator für ein Kraftfahrzeug ist.

**10.** Übertragungssystem **dadurch gekennzeichnet, dass** es zumindest eine Riemenscheibe zum Entkoppeln eines Zusatzgeräts nach einem der vorhergehenden Ansprüche umfasst.

**11.** System nach Anspruch 10, **dadurch gekennzeichnet, dass** die Steifigkeit k des elastischen Elements (206, 208) folgende Relation erfüllt:

$$k \leq 8\pi^2 (f^*)^2 I$$

wobei f* eine kritische Frequenz des Systems und I die Trägheit des zu entkoppelnden Zusatzgeräts bezeichnet.

**12.** System nach Anspruch 11, **dadurch gekennzeichnet, dass**:

$$k \leq 4,5 \; \pi^2 (f^*)^2 I.$$

**13.** System nach einem der Ansprüche 11 oder 12, **dadurch gekennzeichnet, dass**:

$$2\pi^2 (f^*)^2 I < k.$$

**Claims**

**1.** A power transmission pulley for decoupling a belt-driven accessory, the pulley comprising a driving pulley element having an outer outline that is adapted to receive a belt, and a resilient element presenting a decoupling function interposed between the pulley element and a receiver device for being coupled to said accessory, so that it includes one single freewheel (204) of the ball, needle, or cam type disposed in series with the resilient element (206, 208) between the pulley element (200) and said receiver device (203, 220), the freewheel being either disposed between the resilient element (206,208) and said receiver device (203, 220), the resilient element being secured to the pulley element (200), or disposed between the pulley element (200) and the resilient element (206, 208), which is secured to said receiver device (203, 220) **characterized in that** the freewheel serves, in a locked state, to transmit power so long as the driving element is driven by the belt, and serves, in an unlocked state, to decouple the freewheel otherwise, the resilient element (206, 208) entering into function where the freewheel (204) is in its locked state.

**2.** A pulley according to claim 1, **characterized in that** the freewheel device (204) is mounted on a nut (203) for receiving a shaft coupled to said accessory.

**3.** A pulley according to claim 1, **characterized in that** the resilient element (206, 208) is secured to a nut (203) for receiving a shaft (220) coupled to said accessory.

**4.** A pulley according to any preceding claim, **characterized in that** it presents at least one rolling bearing (202) interposed between said ribbed outer outline (201) and a nut (203) for receiving a shaft (220) coupled to said accessory.

**5.** A pulley according to any one of claims 1 to 3, **characterized in that** it presents at least one rolling bearing (202) situated inside said ribbed outer outline (201) and presenting an inner outline (202') suitable for being guided on a shaft (220) coupled to said accessory.

6. A pulley according to claim 4 or 5, **characterized in that** at least one said bearing (202) is a ball bearing or a needle bearing.

7. A pulley according to any preceding claim, **characterized in that** the resilient element (206) comprises at least one elastomer part.

8. A pulley according to any one of claims 1 to 6, **characterized in that** the resilient element is a spring (208), in particular a spiral spring.

9. A pulley according to any preceding claim, **characterized in that** said accessory is an alternator of a motor vehicle.

10. A transmission system, **characterized in that** it includes at least one accessory decoupling pulley according to any preceding claim.

11. A system according to claim 10, **characterized in that** the stiffness $\underline{k}$ of the resilient element (206, 208) satisfies the following relationship:

$$k \leq 8\pi^2 (f^*)^2 I$$

where f* designates a critical frequency of the system and I designates the inertia of the accessory to be decoupled.

12. A system according to claim 11, **characterized in that**:

$$k \leq 4.5\pi^2 (f^*)^2 I$$

13. A system according to claim 11 or 12, **characterized in that**:

$$2\pi^2 (f^*)^2 I < k$$

FIG.1

FIG.2

Vitesse du vilebrequin (tr/mn)

FIG.3

FIG.4

FIG.5a

FIG.5b

FIG.6a

FIG.7

FIG.6b

FIG.6c

FIG.8

FIG.9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1316740 A
- US 5234089 A
- US 6083130 A
- US 4725259 A
- US 5676225 A
- US 6394248 B
- WO 03036114 A